# EUROPÄISCHE PATENTSCHRIFT

(11) **EP 0 823 042 B1**
(45) Veröffentlichungstag und Bekanntmachung des Hinweises auf die Patenterteilung: **30.12.1998**
(21) Anmeldenummer: 96910907.3
(22) Anmeldetag: 26.04.1996
(51) Int. Cl.: G01K 7/22

(54) **VERFAHREN ZUM HERSTELLEN EINES TEMPERATURFÜHLERS UND BAUELEMENT MIT TEMPERATURABHÄNGIGEM WIDERSTANDSWERT**
PROCESS FOR PRODUCING A TEMPERATURE SENSOR AND COMPONENT WITH TEMPERATURE-DEPENDENT RESISTANCE
PROCEDE DE PRODUCTION D'UNE SONDE PYROMETRIQUE ET COMPOSANT DONT LA VALEUR DE LA RESISTANCE DEPEND DE LA TEMPERATURE

(30) Priorität: 28.04.1995 DE 19515798
(43) Veröffentlichungstag der Anmeldung: 11.02.1998
(73) Patentinhaber: SIEMENS AKTIENGESELLSCHAFT, 80333 München (DE)
(72) Erfinder: WILDGEN, Andreas, D-93152 Nittendorf (DE)
(86) Internationale Anmeldenummer: DE9600734
(87) Internationale Veröffentlichungsnummer: WO9634260

(56) Entgegenhaltungen:
- IEEE TRANSACTIONS ON COMPONENTS,HYBRIDS,AND MANUFACTURING TECHNOLOGY, Bd. 3, Nr. 4, Dezember 1980, NEW YORK US, Seiten 541-550, XP002010173 AKIRA IKEGAMI E.A.: "THICK-FILM THERMISTOR AND ITS APPLICATIONS"
- PATENT ABSTRACTS OF JAPAN vol. 17, no. 85 (E-1322), 19.Februar 1993 & JP,A,04 280602 (TAIYO YUDEN CO LTD), 6.Oktober 1992, in der Anmeldung erwähnt
- PATENT ABSTRACTS OF JAPAN vol. 14, no. 36 (E-877), 23.Januar 1990 & JP,A,01 270301 (KOA CORP.), 27.Oktober 1989,
- PATENT ABSTRACTS OF JAPAN vol. 17, no. 514 (E-1433), 16.September 1993 & JP,A,05 135908 (MATSUSHITA ELECTRIC IND CO), 1.Juni 1993,
- PATENT ABSTRACTS OF JAPAN vol. 10, no. 344 (P-518) [2400] , 20.November 1986 & JP,A,61 147125 (OMRON TATEISI), 4.Juli 1986,

## Beschreibung

Die Erfindung betrifft Verfahren nach dem Oberbegriff von Anspruch 1 und ein Bauelement nach Anspruch 3. Derartige Temperaturfühler und Bauelemente werden unter anderem in dem Ansaugtrakt von Kraftfahrzeugmotoren verwendet, und zwar zum Zwecke einer genauen Motorsteuerung. Der Temperaturfühler oder -sensor wird zusammen mit einem Luftmassenmesser in dem Ansaugtrakt zwischen der Drosselklappe und dem Luftfilter eingebaut.

Bei einem bekannten Verfahren zur Herstellung von Temperatursensoren mit einem Steckkontaktpaar und einem Widerstandselement, und zwar in Form von Scheiben, Pillen oder ähnlichem, wird in einem Kunststoffspritzvorgang, das aus einem Steckerflansch und einem die Steckkontaktpaare führenden Halterungsteil bestehende Gehäuse hergestellt. In einem weiteren Spritzvorgang wird eine das Sensorelement in Form einer Heiß- oder Kaltleitertablette aufnehmende isolierende Kappe hergestellt (DE-A 42 37 039).

Bei einem anderen bekannten Verfahren zum Herstellen von Bauelementen mit temperaturabhängigem Widerstandswert, sogenannter Thermistoren (JP 4-280602 A, Patent Abstracts of Japan, E-1322, 19.02.1993, Band 17/Nr. 85), werden auf ein Substrat mehrere paarweise verlaufende Leiterbahnen aufgebracht und dann werden Sensorelemente mit je zwei nebeneinander liegenden Leiterbahnen verlötet. Die Sensorelemente und die Leiterbahnen werden mit einer Glasschicht versiegelt. Schließlich wird das Substrat zwischen je zwei Paaren aufeinanderfolgender Leiterbahnen durchgetrennt. Die so geschaffenen Bauelemente sind relativ breit.

Die bekannten Temperatursensoren werden zusammen mit ihrem Gehäuse in dem Ansaugtrakt montiert, dadurch ist aber ihre Ansprechzeit nicht so kurz, wie es heutzutage für eine genaue Motorsteuerung gefordert wird.

Der Erfindung liegt die Aufgabe zugrunde, Temperatursensoren zu schaffen, die sich durch eine sehr kurze Ansprechzeit auszeichnen. Außerdem sollen die einzelnen Temperaturfühler in ihren elektrischen Eigenschaften gut übereinstimmen, d.h. die Herstellungstoleranzen möglichst gering gehalten werden, und sie sollen möglichst wenig Platz beanspruchen.

Diese Aufgabe wird erfindungsgemäß durch ein Verfahren nach Anspruch 1 und ein Bauelement nach Anspruch 3 gelöst. Zweckmäßige Weiterbildungen der Erfindung sind in den Unteransprüchen niedergelegt.

Ausführungsbeispiele der Erfindung werden im folgenden anhand der Zeichnung erläutert. Es zeigen:
- Figur 1: eine der Erläuterung des erfindungsgemäßen Herstellungsverfahren dienende Anordnung einer größeren Anzahl von Temperaturfühlern auf einem Glasplättchen oder Wafer,
- Figur 2: einen erfindungsgemäßen Temperaturfühler in einer Seitenansicht im Schnitt,
- Figur 3: den Temperaturfühler nach Figur 2 in der Draufsicht,
- Figur 4: eine die äußeren Anschlüsse des Temperaturfühlers nach Figur 2 zeigende Schaltungsskizze, und
- Figur 5: eine die äußere Beschaltung des Temperaturfühlers nach Figur 2 zeigende Schaltungsskizze.

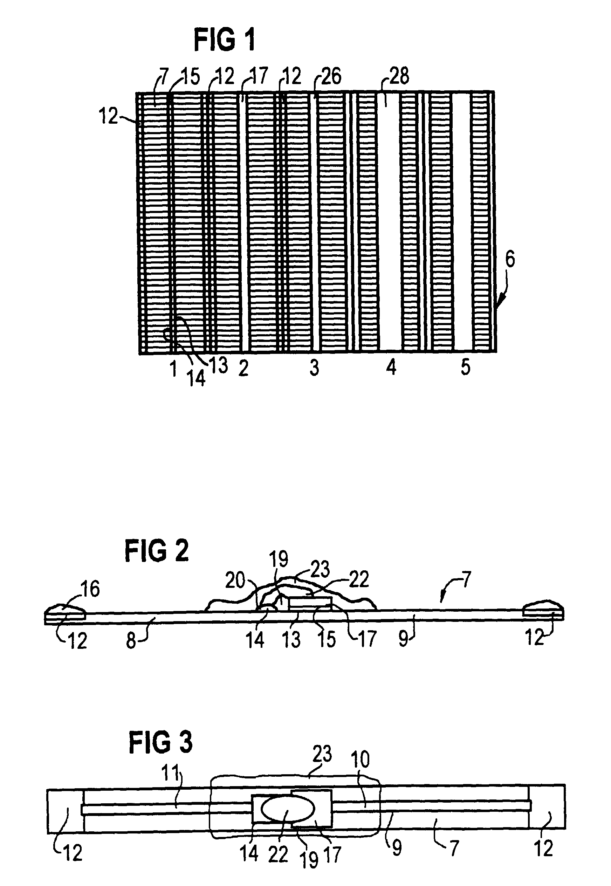

Mehrere Chipreihen 1 bis 5 auf einem Glasplättchen oder -wafer 6 sind in jeweils einem anderen Schritt des Herstellungsverfahrens dargestellt (Figur 1). Auf dem Wafer 6 mit den Abmessungen 2 × 2 Zoll² und einer Dicke von 0,15 mm werden Leiterbahnen und lötbare Kontaktflächen nach bekannten Verfahren, z.B. im Siebdruckverfahren oder in Dünnfilmtechnik, aufgebracht. Im Anschluß an die nachfolgend beschriebene Herstellung einer Vielzahl von einzelnen Temperaturfühlern 7 (in Figur 1 nur angedeutet, vgl. auch Figuren 2 und 3) werden die Temperaturfühler 7 "vereinzelt", indem durch Sägen, Sandstrahlen oder dergleichen eine Vielzahl einzelner Substratstreifen 8 mit den darauf aufgebrachten Schichten und Elementen voneinander getrennt werden. Der einzelne Temperaturfühler 7 weist dann eine Abmessung von zum Beispiel 9 × 0,6 oder 7 × 0,7 mm² auf.

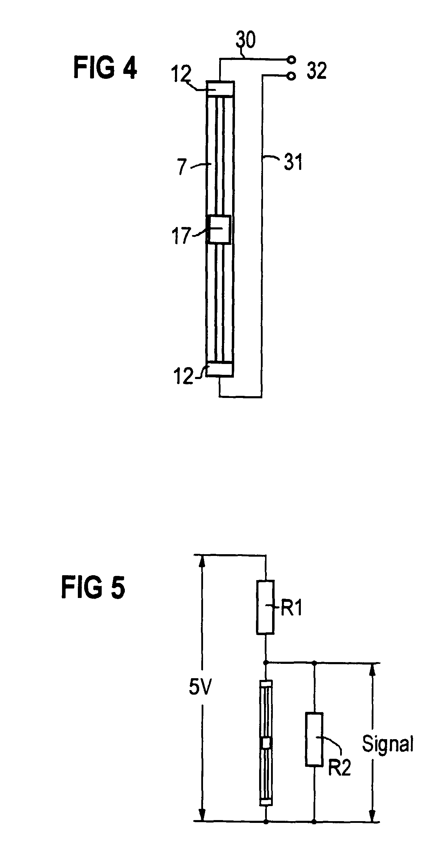

Das Material der Leiterbahnen 9 (Figur 2) muß stromleitend, benetzbar sowie wirtschaftlich sein und gut auf Glas haften, weitere Anforderungen muß es nicht erfüllen. Die Leiterbahn 9 weist zwei Teilleiterbahnen 10 und 11 auf, die zum Beispiel durch Durchtrennen der Leiterbahn 9 hergestellt werden. In der Chipreihe 1 werden zwei äußere lötbare Kontaktflächen 12 und zwei innere lötbare Kontaktflächen 13 und 14 (in dem Beispiel von Figur 2) zum Beispiel durch Siebdruck aufgebracht. Sowohl das für die lötbaren Kontaktflächen 12, 13 und 14 verwendete Lot als auch ein leitender SMD-Kleber 15 (SMD = surface mounted device) aus Zinn oder Silber, werden als durchgehende Bahnen auf alle Temperaturfühler-Substratstreifen 8 einer Chipreihe aufgebracht. Die äußeren lötbaren Kontaktflächen 12 sind für den elektrischen Anschluß des Temperaturfühlers 7 bestimmt, d.h. jede von ihnen führt zum Beispiel über den Stecker eines Luftmassenmessers (vgl. Figur 4 und 5) oder eines Einzeltemperaturfühlers zu einer (hier nicht dargestellten) Motorsteuerung.

Ein Sensorelement 17 in Form einer Pille, eines Quaders oder dergleichen aus einem temperaturabhängigen Widerstandsmaterial wird unter Wärmezugabe auf die innere lötbare Kontaktfläche (auch als Lötpad bezeichnet) 13 aufgelötet oder auch mit dem leitenden SMD-Kleber 15 aufgeklebt. Da in dem Ausführungsbeispiel das Sensorelement aus einem Heißleiter- oder NTC-Widerstand besteht, wird das Sensorelement im folgenden auch als NTC-Chip 17 bezeichnet. Der Abstand zwischen den äußeren lötbaren Kontaktflächen des NTC-Chips 17, d.h. dessen Dicke, beträgt etwa 250 µm. Bei dem Lötpad 13 und 14 wird die Stärke und Menge des Lötzinns an die Größe und Form des NTC-Chips 17 angepaßt, so daß beim Löten kein Lötzinn seitlich hervortritt. Die Kontaktierung kann wahlweise auch mit einem Silber-Leitkleber 15 ausgeführt werden.

Zwischen dem NTC-Chip 17 und der inneren Kontakfläche 14, auf der in einzelnen Fällen auch ein Zinnhügel 20 aufgesetzt sein kann, wird eine isolierende Lackspur 19 aufgebracht, und zwar mit einer bekannten Lackdosiereinrichtung, die mit einem in x- und y-Richtung verschiebbaren Tisch (beide sind hier nicht dargestellt) bewegt wird. Nach dem Aushärten des Lacks wird auf die Lackspur eine weitere Spur oder ein Tropfen 22 aus einem Silber-Leitkleber aufgebracht, durch den die Oberseite des NTC-Chips 17 mit der inneren Kontakfläche 14 (oder dem Zinnhügel 20) verbunden wird. Nach dem Aushärten werden der NTC-Chip 17 und die Lötstelle 20 mit einer Lackschicht 23 überzogen. Bei geeigneter Materialwahl ist es möglich, die Lackschichten 19 und 23 und den Silberleitkleber 22 gleichzeitig auszuhärten. Die in der Zeichnung unten liegende Anschluß- oder Kontaktfläche des NTC-Chips 17, der hier nicht mit Anschlußdrähten versehen ist, ist nunmehr mit der ersten Teilleiterbahn 10 und dessen oben liegende Anschluß- oder Kontaktfläche mit der zweiten Teilleiterbahn elektrisch leitend verbunden.

Abschließend werden mit einer Säge oder einem anderen geeigneten Trennwerkzeug einzelne parallele Streifen des Glaswafers 6 mit den darauf hergestellten Schichten und Elementen abgetrennt und damit die einzelnen Temperaturfühler 7 hergestellt. Einer dieser einzelnen Temperaturfühler 7 ist in Figur 3 in der Seitenansicht und in Figur 2 in der Draufsicht dargestellt.

Bei einem anderen Verfahren zum Herstellen eines Temperaturfühlers, von dem einzelne Herstellungsschritte vorstehend bereits erwähnt worden sind, werden die Leiterbahnen 9 oder 10 und 11 und die lötbaren Kontaktflächen 12 aller auf einem Glaswafer 6 herzustellenden Temperaturfühler ebenfalls im Siebdruckverfahren oder in Dünnfilmtechnik aufgebracht. In Spalte 1 (Figur 1) wird dann eine durchgehende Bahn eines leitenden SMD-Klebers 15 aufgebracht. Auf diese Bahn werden einzelne Sensorelemente oder NTC-Chips 26 aufgesetzt und der Kleber 15 ausgehärtet (Spalte 2, in Figur 1).

Ein anderes Beispiel eines erfindungsgemäßen Verfahrens wird wie folgt durchgeführt. Durch Eintauchen des Wafers 6 in ein Lötbad werden bei sämtlichen etwa 300 Temperaturfühlern 7, die auf einem Wafer 6 hergestellt werden, die lötbaren Kontaktflächen 12 - die zum späteren Einbau des Temperaturfühlers 7 in einen Luftmassenmesser dienen - und die inneren Lötpads 13, 14 mit einer Zinnschicht 16 bzw. 20 versehen. Die NTC-Chips 17 oder 26 werden in einem Bügellötverfahren angelötet (Spalte 3). Da dabei auch die Leiterbahn verzinnt wird, wird, um thermische Nachteile zu vermeiden, entweder im Bereich des NTC-Chips eine sehr dünne Bahn vorgesehen, oder eine Kunststoffabdeckung aufgebracht oder auch eine Schicht SMD-Kleber auf einen Teil der Leiterbahn aufgebracht. Nach einer Reinigung von Flußmittel und sonstigen Verunreinigungen wird über die Reihe der NTC-Chips 26 eine Schicht Elektrolyselack 28 aufgebracht (Spalte 4). Dieser Lack ist in seiner Viskosität und Menge so eingestellt, daß die Ecken der NTC-Chips 26 sicher bedeckt werden. Nach einer Trocknung und Aushärtung des Lacks wird der Wafer 6 - wie auch in dem Beispiel von Figur 2 - mit einem geeigneten Wachs (im Handel unter der Bezeichnung "Morsa, Gußwachs 0,5 mm blau" erhältlich) auf ein Glassubstrat geklebt und die einzelnen Temperaturfühler 7 durch Sägen abgetrennt.

Der äußere Anschluß des Temperaturfühlers 7 erfolgt über zwei Leitungen 30 und 31, die an je eine der äußeren lötbaren Kontaktflächen 12 angelötet und an einen Stecker 32 angeschlossen sind (Figur 4).

Zum Erzeugen und Abgeben eines der zu messenden Temperatur entsprechenden Ausgangssignals, insbesondere für eine Motorsteuerung, ist der Temperaturfühler 7 wie folgt elektrisch beschaltet (Figur 5) : er liegt in Reihe mit einem ersten Widerstand R1 an einer 5V-Spannungsquelle. Sein Ausgangssignal wird an einem zwischen seinen äußeren Anschlüssen liegenden zweiten Widerstand R2 abgegriffen.

## Patentansprüche

1. Verfahren zum Herstellen eines Temperaturfühlers, dessen Sensorelement einen temperaturabhängigen Widerstandskörper in Form einer Pille, eines Quaders oder dergleichen enthält, insbesondere zur Verwendung in dem Ansaugtrakt von Verbrennungskraftmaschinen, mit folgenden Schritten:
- mehrere parallele Leiterbahnen werden auf ein Glasplättchen unter Ausbildung jeweils hintereinander liegender Teilleiterbahnen aufgebracht,
- die Teilleiterbahnen werden mit je einer äußeren lötbaren Kontaktfläche und je einer inneren Kontaktfläche versehen,
- je ein Sensorelement, das aus einem temperaturabhängigen Widerstandskörper besteht, wird mit der inneren Kontaktfläche einer ersten Teilleiterbahn elektrisch leitend verbunden,
- zwischen das Sensorelement und die jeweils innere Kontaktfläche einer zweiten Teilleiterbahn wird eine isolierende Lackspur aufgebracht,
- das Sensorelement wird mit der inneren Kontaktfläche der zweiten Teilleiterbahn elektrisch leitend verbunden,
- das Sensorelement und die inneren Kontaktflächen werden mit einer Lackschicht überzogen, und
- durch Zerteilen des Glasplättchens mit zwischen den einzelnen Sensorelementen verlaufenden parallelen Schnitten werden mehrere untereinander gleiche Temperaturfühler gebildet.

2. Verfahren nach Anspruch 1, dadurch gekennzeichnet, daß das Sensorelement und die innere Kontaktfläche der zweiten Teilleiterbahn mit einem Leitkleber verbunden werden und daß die inneren Kontaktflächen und das Sensorelement nach dem Aushärten dieses Leitklebers mit der Lackschicht überzogen werden.

3. Temperaturabhängiges Bauelement, insbesondere Temperaturfühler zur Verwendung in dem Ansaugtrakt von Verbrennungskraftmaschinen in Verbindung mit einem Luftmassenmesser, mit einem aus einem temperaturabhängigen Widerstandskörper bestehenden Sensorelement in Form einer Pille, eines Quaders oder dergleichen, das auf einem streifenförmigen Substrat (7) aus Glas oder Keramik befestigt und mit auf das Substrat aufgebrachten Leiterbahnen elektrisch leitend verbunden ist, wobei das Sensorelement (17) mit einer Lackschicht (23) überzogen ist, **dadurch gekennzeichnet,**
- daß auf dem Substrat eine erste und eine zweite Teilleiterbahn (10, 11) hintereinander angeordnet sind,
- daß beide Teilleiterbahnen (10, 11) je mit einer äußeren und einer inneren Kontaktfläche (12, 13, 14) versehen sind,
- daß eine erste Kontaktfläche des Sensorelements (17) mit der inneren Kontaktfläche (13) der ersten Teilleiterbahn (10) elektrisch leitend verbunden ist,
- daß zwischen das Sensorelement (17) und die jeweils innere Kontaktfläche (14) der zweiten Teilleiterbahn (11) eine isolierende Lackspur (19) aufgebracht ist, und
- daß eine zweite Kontakfläche des Sensorelements (17) mit der inneren Kontaktfläche (14) der zweiten Teilleiterbahn (11) elektrisch leitend verbunden ist.

4. Temperaturfühler nach Anspruch 3, dadurch gekennzeichnet, daß das Sensorelement (17) aus einem Chip aus einem gesinterten NTC-Werkstoff besteht.

5. Temperaturfühler nach Anspruch 3, dadurch gekennzeichnet, daß die von dem Substrat abgewandte Seite des Sensorelements (17) durch eine Bahn aus einem Silberleitkleber (22) mit der inneren Kontaktfläche (13) der zweiten Teilleiterbahn (11) verbunden ist.

6. Temperaturfühler nach Anspruch 3, dadurch gekennzeichnet, daß die inneren Kontaktflächen (13, 14) und das Sensorelement (17) mit einer Lackschicht (23) überzogen sind.

## Claims

1. Process for producing a temperature sensor whose sensor element contains a temperature-dependent resistance element in the form of a pill, a parallelepipedon or the like, in particular for use in the intake tract of internal combustion engines, having the following steps:
- a plurality of parallel conductor tracks are applied to a glass platelet forming part conductor tracks lying respectively one behind the other,
- the part conductor tracks are provided with one outer solderable contact face each and one inner contact face each,
- in each case one sensor element which is composed of a temperature-dependent resistance element is electrically conductively connected to the inner contact face of a first part conductor track,
- an insulating line of resist is applied between the sensor element and the respective inner contact face of a second part conductor track,
- the sensor element is electrically conductively connected to the inner contact face of the second part conductor track,
- the sensor element and the inner contact faces are covered with a layer of resist, and
- by splitting up the glass platelet with parallel cuts running between the individual sensor elements, a plurality of temperature sensors which are identical to one another are formed.

2. Method according to Claim 1, characterized in that the sensor element and the inner contact face of the second part conductor track are connected to a conductive adhesive, and in that the inner contact faces and the sensor element are covered with the layer of resist after this conductive adhesive has set.

3. Temperature-dependent component, in particular temperature sensor for use in the intake tract of internal combustion engines in conjunction with an air mass flow rate meter with a sensor element in the form of a pill, a parallelepipedon or the like, which is composed of a temperature-dependent resistance element and which is mounted on a strip-shaped substrate (7) composed of glass or ceramic and is electrically conductively connected to conductor tracks applied to the substrate, the sensor element (17) being covered with a layer of resist (23), characterized
- in that a first and a second part conductor track (10, 11) are arranged one behind the other on the substrate,
- in that the two part conductor tracks (10, 11) are each provided with an outer contact face and an inner contact face (12, 13, 14),
- in that a first contact face of the sensor element (17) is electrically conductively connected to the inner contact face (13) of the first part conductor track (10),
- in that an insulating line of resist (19) is applied between the sensor element (17) and the respective inner contact face (14) of the second part conductor track (11), and
- in that a second contact face of the sensor element (17) is electrically conductively connected to the inner contact face (14) of the second part conductor track (11).

4. Temperature sensor according to Claim 3, characterized in that the sensor element (17) comprises a chip composed of a sintered NTC substance.

5. Temperature sensor according to Claim 3, characterized in that the side of the sensor element (17) facing away from the substrate is connected to the inner contact face (13) of the second part conductor track (11) by means of a track composed of a silver conductive adhesive (22).

6. Temperature sensor according to Claim 3, characterized in that the inner contact faces (13, 14) and the sensor element (17) are covered with a layer of resist (23).

## Revendications

1. Procédé de fabrication d'une sonde de température, dont l'élément détecteur contient un corps de résistance dépendant de la température, sous la forme d'une pastille, d'un parallélépipède ou similaire, en particulier pour utilisation dans un collecteur d'aspiration de moteur à combustion interne, comportant les étapes suivantes:
- plusieurs pistes conductrices parallèles sont déposées sur une plaquette de verre, en réalisant chaque fois des pistes partielles conductrices placées les unes derrière les autres,
- les pistes partielles conductrices sont chacune munies d'une surface de contact extérieure soudable et chacune d'une surface de contact intérieure soudable,
- chaque élément détecteur, constitué d'un corps de résistance dépendant de la température, est relié à la surface de contact intérieure d'une première piste partielle conductrice, de façon à être conductrice de l'électricité,
- entre l'élément détecteur et chaque fois la surface de contact intérieure d'une deuxième piste partielle conductrice, est appliquée une trace de laque isolante,
- l'élément détecteur est relié de façon électriquement conductrice, à la surface de contact intérieure de la deuxième piste partielle conductrice,
- l'élément détecteur et les surfaces de contact intérieures sont recouverts d'une couche de laque, et,
- en divisant la plaquette de verre par des découpes parallèles s'étendant entre les différents éléments détecteurs, on réalise plusieurs sondes de température identiques entre elles.

2. Procédé suivant la revendication 1, caractérisé en ce que l'élément détecteur et la surface de contact intérieure de la deuxième piste partielle conductrice sont reliés entre eux au moyen d'une colle conductrice et en ce que les surfaces de contact intérieures et l'élément détecteur, après durcissement de cette colle conductrice, sont revêtus par la couche de laque.

3. Composant dépendant de la température, en particulier sonde de température pour utilisation dans le collecteur d'admission de moteurs à combustion interne, en liaison avec un appareil de mesure de la masse d'air, comportant un élément détecteur constitué d'un corps de résistance dépendant de la température, sous la forme d'une pastille, d'un parallélépipède ou similaire, qui est fixé sur un substrat (7) en verre ou en céramique, en forme de bande et qui est relié, de façon électriquement conductrice, à des pistes conductrices déposées sur le substrat, l'élément détecteur (17) étant revêtu d'une couche de laque (23), caractérisé en ce que,
- sur le substrat, sont disposées l'une derrière l'autre une première piste partielle conductrice et une deuxième piste partielle conductrice (10, 11),
- en ce que les deux pistes partielles conductrices (10, 11) sont chacune munies d'une surface de contact extérieure et d'une surface de contact intérieure (12, 13, 14),
- en ce qu'une première surface de contact de l'élément détecteur (17) est reliée, de façon électriquement conductrice, à la surface de contact intérieure (13) de la première piste partielle conductrice (10),
- en ce qu'entre l'élément détecteur et chaque surface de contact intérieure (14) de la deuxième piste partielle conductrice (11), est appliquée une trace de laque isolante (19), et
- en ce qu'une deuxième surface de contact de l'élément détecteur (17) est reliée, de façon électriquement conductrice, à la surface de contact intérieure (14) de la deuxième piste partielle conductrice (11).

4. Sonde de température suivant la revendication 3, caractérisée en ce que l'élément détecteur (17) est constitué d'une puce en matériau NTC fritté.

5. Sonde de température suivant la revendication 3, caractérisée en ce que la face de l'élément détecteur (17) opposée au substrat est reliée par une bande en colle conductrice d'argent (22) à la surface de contact intérieure (13) de la deuxième piste partielle conductrice (11).

6. Sonde de température suivant la revendication 3, caractérisée en ce que les surfaces de contact intérieures (13, 14) et l'élément détecteur (17) sont revêtus avec une couche de laque (23).
